# FASCICULE DE BREVET EUROPEEN

(11) **EP 1 990 446 B1**
(45) Date de publication et mention de la délivrance du brevet: **09.12.2009**
(21) Numéro de dépôt: 08155201.0
(22) Date de dépôt: 25.04.2008
(51) Int. Cl.: C25D 3/02, C25D 5/02, C25D 5/06, C25D 7/00, F01D 5/00, F01D 5/28, F01D 5/30

(54) **Procédé de réparation d'une aube mobile de turbomachine, aube de turbomachine et turbomachine comportant cette aube**
Reparaturverfahren einer beweglichen Laufradschaufel eines Turbotriebwerks, Laufradschaufel eines Turbotriebwerks und Turbotriebwerk, das diese Laufradschaufel umfasst
Method of repairing a mobile vane of a turbomachine, turbomachine vane and turbomachine comprising this vane

(30) Priorité: 30.04.2007 FR 0703125
(43) Date de publication de la demande: 12.11.2008
(73) Titulaire: SNECMA, 75015 Paris (FR)
(72) Inventeur: FOUCHER, Christelle, 77240 Cesson (FR); MONS, Claude, Marcel, 77176 Savigny le Temple (FR)
(74) Mandataire: David, Daniel

(56) Documents cités:
- EP-A- 0 297 982
- EP-A- 1 439 308
- EP-A- 1 645 724
- EP-A- 1 686 239

## Description

La présente invention concerne le domaine des turbomachines et vise la réparation d'une aube présentant une zone usée sur une portion de surface, plus particulièrement située dans la zone du pied.

Un turbomoteur à turbine à gaz à double flux comprend un rotor de soufflante comportant une pluralité d'aubes montées sur la jante d'un disque entraîné par l'arbre du rotor basse pression du générateur de gaz. Les aubes de soufflante en titane ou en alliage de titane sont retenues dans des alvéoles individuelles orientées globalement dans la direction axiale de la machine. Le pied des aubes a une forme à section en queue d'aronde complémentaire des alvéoles qui les reçoivent. Selon un type de machine, les aubes se prolongent en aval par une protubérance axiale par laquelle l'aube est immobilisée dans l'alvéole. Un exemple est décrit dans le brevet au nom du présent déposant dans le brevet EP165860. L'aube est immobilisée axialement par un anneau de verrouillage aval contre lequel il est également en appui axial. L'anneau peut être formé d'une bride du rotor du compresseur aval. En raison des mouvements de vibration en fonctionnement, le pied est soumis à des chocs répétés et à un frottement contre les surfaces sur lesquelles il s'appuie, qui induisent une usure et une perte de matière dans la zone du pied tournée vers l'aval. Lorsque l'usure atteint un certain seuil, il est nécessaire de remplacer la pièce. Jusqu'à présent les pièces étaient mises au rebut ou bien alors stockées en attente de réparation, aucune méthode connue n'ayant donné de résultat satisfaisant.

Recharger une portion de surface sur l'aube par soudage est difficile car l'abattement en fatigue provoqué par le chauffage de la pièce est très important et n'est pas acceptable en bas de pale d'une aube de soufflante.

En outre la forte usure constatée, parfois supérieure à 0,5 mm, et la taille de la surface usée, de l'ordre de 1 à 2 cm², rendent très délicate l'application d'un procédé de rechargement par projection thermique. Cela est toujours possible ; mais le risque est de perdre le revêtement par écaillage. Il s'ensuit une épaisseur maximale autorisée pour la réparation qui reste insuffisante pour les usures les plus importantes que l'on rencontre sur ces pièces.

Par ailleurs la pièce sur laquelle l'aube prend appui est en titane également. Le contact entre surfaces en titane exclut la majorité des revêtements.

Les conditions particulières de cette zone sont les suivantes :
- Fortes contraintes oligo-cycliques impliquant la mise en oeuvre d'un procédé de rechargement n'affectant pas la tenue en fatigue,
- Pression de contact mal répartie et cisaillement centrifuge impliquant une bonne adhérence de la couche de rechargement,
- Contact avec du titane demandant un matériau de rechargement approprié.

L'invention a donc pour objet un procédé de réparation qui ne présente pas les inconvénients des procédés connus de réparation de pièces de turbomachines et qui permet de résoudre les problèmes spécifiques liés au rechargement d'une portion de surface telle qu'en extrémité de talon ou de pied d'aube de soufflante en titane.

Conformément à l'invention, le procédé de réparation par rechargement d'une portion de surface d'une aube mobile de turbomachine en titane ou en alliage de titane est caractérisé par le fait qu'il comprend au moins une étape où l'on dépose sur ladite portion de surface par électrolyse du nickel, du cobalt ou une combinaison des deux métaux.

Selon un mode de réalisation particulier le dépôt de métal est effectué en au moins deux étapes combinant les électrolyses au tampon et en bain ou en micro bain.

Le procédé de l'invention permet la réparation par rechargement de parties usées sur des profondeurs relativement importantes, de l'ordre du millimètre mais sur de petites surfaces. C'est le cas par exemple pour une aube de soufflante présentant un pied à section en queue d'aronde dont une partie de la face aval du talon est usée.

Un tel procédé présente l'avantage de ne pas affecter le potentiel de fatigue du substrat. En outre, on constate dans le cas d'usure par frottement contre des pièces en titane que le comportement de la pièce réparée est meilleur que la configuration initiale.

Les particules de métal de l'électrolyte comprennent le nickel, le cobalt ou une combinaison des deux métaux ; par exemple il s'agit de sulfamate de nickel.

Le procédé permet le dépôt d'une couche de métal comprise entre 10 µm et un mm.

Pour ses propriétés avantageuses, l'invention porte également sur une aube mobile de soufflante de turbomachine en titane ou en alliage de titane présentant un pied en queue d'aronde et une portion de surface d'appui axial. L'aube est caractérisée par le fait que ladite surface d'appui axial est recouverte au moins en partie d'un dépôt métallique, par voie électrolytique et le dépôt métallique comprend le nickel, le cobalt ou une combinaison des deux.

On décrit maintenant plus en détail des modes de réalisation non limitatifs de l'invention en référence aux dessins sur lesquels
La figure 1 montre en coupe axiale une aube de soufflante montée sur un disque de rotor de turbomachine ;
La figure 2 montre une vue en coupe selon la direction 2-2 de la figure 1 ;
La figure 3 montre le schéma d'une installation de rechargement par électrolyse au tampon d'une portion de surface telle que le talon de l'aube de la figure 2 ;
La figure 4 montre le schéma d'une installation de rechargement par électrolyse en bain ;
La figure 5 montre le schéma d'une installation de rechargement par électrolyse en micro bain.

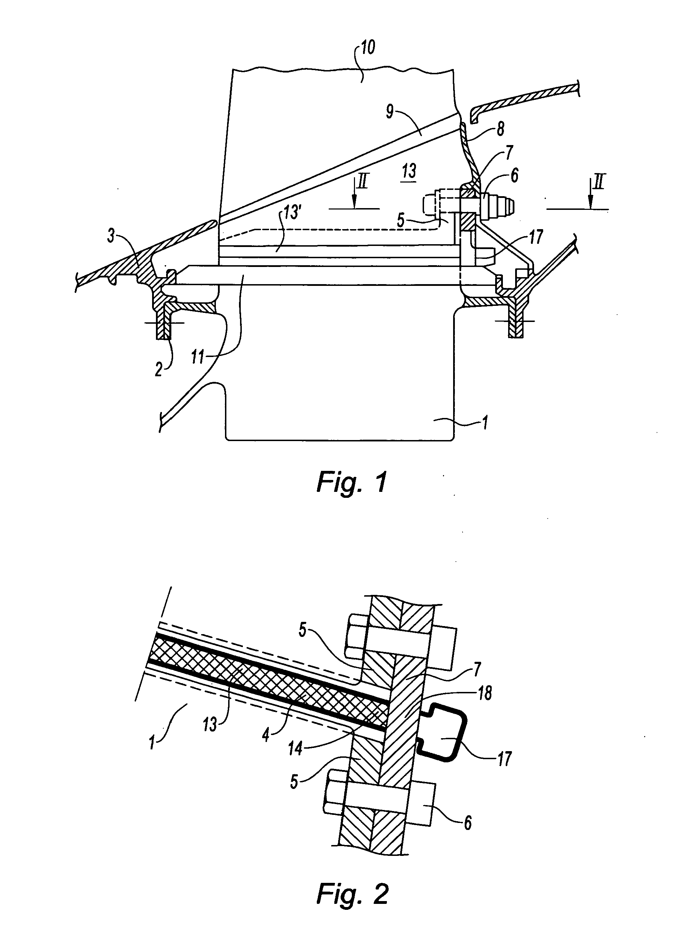

A la figure 1 on a représenté un montage tel que décrit dans le brevet EP165860. On voit un disque 1 d'un rotor de turbomoteur présentant une bride sur laquelle est fixé un capot avant conique 3. Dans la jante du disque 1 sont usinés par brochage des alvéoles 4 sensiblement axiaux. Leur section est en forme de queue d'aronde et correspond à la forme de la partie inférieure 13' du pied 13 des aubes 10. Le pied 13 est la partie de l'aube 10 sous la plateforme 9 qui délimite la veine de gaz. L'aube est calée à l'intérieur de l'alvéole par une clavette 11 glissée sur la partie inférieure 13' du pied 13. Sur la face aval, la jante du disque comprend une bride radiale 5 pour la fixation par des boulons 6 d'un anneau de verrouillage 7 et d'un anneau d'étanchéité 8.

L'anneau de verrouillage 7 présente des échancrures 18 radialement vers l'intérieur en nombre égal et en face des alvéoles. La partie inférieure 13' des pieds 13 d'aube est par ailleurs prolongée sur la partie arrière d'une protubérance axiale 17, ladite protubérance étant pourvue latéralement de deux encoches. Les protubérances sont engagées dans les échancrures 18 dont les flancs sont guidés à l'intérieur des encoches latérales de la protubérance.

L'anneau de verrouillage 7 masque ainsi au moins partiellement l'extrémité aval des alvéoles 4.

La partie arrière du pied 13 de l'aube vient en butée sur une portion de surface 14 contre l'anneau de verrouillage 7 entre deux boulons 6. En raison des vibrations en fonctionnement du moteur, la portion de surface 14 vient frotter contre la surface de l'anneau de verrouillage et subit une usure importante avec perte de matière. Ce type de portion de surface est comme mentionné plus haut difficile à réparer. En l'état actuel de la technique aucune solution satisfaisante n'existe.

Conformément à l'invention, on répare ce type de portion de surface par rechargement de matière. La réparation consiste en la formation d'une couche de métal qui va combler le déficit de matière mais aussi rendre la surface plus résistante à l'usure.

Le produit métallique de rechargement est selon l'invention déposé sur la surface usée par électrolyse au tampon, par électrolyse en bain ou encore par électrolyse en micro-bain.

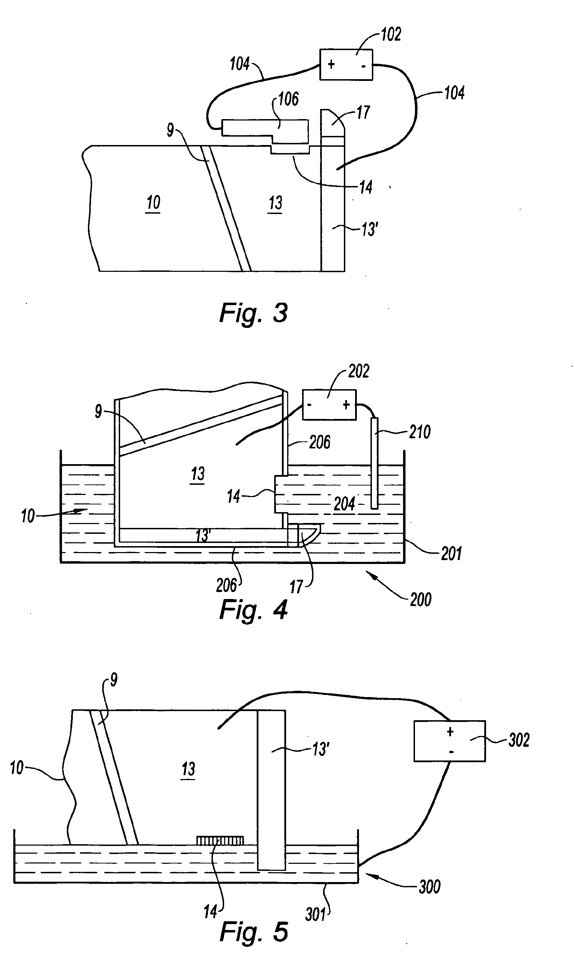

Sur la figure 3 on a représenté schématiquement une installation de rechargement par électrolyse au tampon. Le dispositif 100 comprend une source 102 de courant électrique reliée par des conducteurs 104 à l'aube 13 formant la cathode et à un tampon 106 qui forme l'anode et est imprégné d'une solution électrolytique. Le tampon est par exemple une électrode en graphite et sa géométrie et sa dimension sont adaptées à la forme et à la dimension de la portion de surface à traiter. La solution électrolytique peut être du sulfamate de nickel pour un dépôt de nickel.

Sur la figure 4 le produit métallique de rechargement est déposé par électrolyse en bain. L'installation 200 comprend une cuve 201 remplie d'une solution électrolytique 204 dans laquelle est immergée au moins en partie le pied d'aube 13 dont seule la portion 14 de surface à traiter est en contact avec la solution électrolytique. Le reste de l'aube est protégé par des moyens appropriés tels que des rubans adhésifs 206. L'aube est reliée à une source de courant électrique 202 pour former la cathode et une électrode 210 est immergée dans la solution électrolytique et reliée à la source de courant 202 pour former l'anode. On peut comme dans la solution précédente utiliser une électrode 210 en graphite et du sulfamate de nickel comme solution électrolytique.

Sur la figure 5 le produit métallique est déposé par électrolyse en micro bain au moyen dans une installation 300 comprenant un bac 301 qui est conformé pour recevoir l'aube 1 et une solution électrolytique qui est en contact avec l'aube seulement au niveau de la partie de la surface présentant un déficit de matière. Une source de courant électrique 302 est reliée à l'aube 13 pour former la cathode et au bac 301 pour former l'anode.

La surface de l'aube ainsi réparée peut éventuellement être usinée pour retrouver la forme initiale. La couche formée peut aussi si nécessaire servir de sous couche à un revêtement déposé par une autre voie qui peut être une autre forme d'électrolyse.

Par exemple une première couche formée par électrolyse au tampon peut servir de sous couche pour un dépôt selon une autre technique d'électrolyse, telle qu'un dépôt par électrolyse en bain.

## Revendications

1. Procédé de réparation par rechargement d'une portion de surface (14) disposée sur le pied (13) d'une aube (10) mobile de turbomachine en titane ou en alliage de titane **caractérisé par le fait que** l'on dépose sur ladite portion de surface par électrolyse du nickel, du cobalt ou une combinaison des deux métaux.

2. Procédé de réparation selon la revendication précédente, le pied (13) de l'aube étant à section à queue d'aronde et ladite portion de surface étant une portion de surface d'appui axial de l'aube.

3. Procédé selon l'une des revendications précédentes dont le dépôt de métal est effectué par électrolyse au tampon.

4. Procédé selon l'une des revendications 1 ou 2 dont le dépôt de métal est effectué par électrolyse en bain.

5. Procédé selon l'une des revendications 1 ou 2 dont le dépôt de métal est effectué par électrolyse en micro bain.

6. Procédé selon l'une des revendications 1 ou 2 dont le dépôt de métal est effectué en au moins deux étapes combinant les électrolyses au tampon et en bain ou en micro bain.

7. Procédé selon la revendication précédente appliqué à une aube (10) de soufflante.

8. Procédé selon la revendication précédente, dont l'électrolytique comprend du sulfamate de nickel.

9. Procédé selon l'une des revendications précédentes selon lequel on dépose une couche de métal comprise entre 10 µm et un mm.

10. Aube mobile de turbomachine en titane ou en alliage de titane présentant un pied en queue d'aronde et une surface d'appui axial disposée sur ledit pied, **caractérisée par le fait que** ladite surface d'appui axial est recouverte au moins en partie d'un dépôt mélanique, par voie électrolytique, comprenant le nickel, le cobalt ou une combinaison des deux.

11. Turbomachine comportant une aube selon la revendication 10.

## Claims

1. A method of repairing through recharging a surface portion (14) provided on the base (13) of a revolving blade (10) of a turbine engine made of titanium or titanium alloy, **characterised in that** nickel, cobalt or a combination of both metals is deposited onto said surface portion through electrolysis.

2. The repairing method according to the preceding claim, wherein the base (13) of the blade has a dovetail cross-section and said surface portion is an axial bearing surface portion.

3. The method according to one of the preceding claims, wherein the metal deposition is carried out by buffer electrolysis.

4. The method according to claim 1 or 2, wherein the metal deposition is carried out by electrolysis in a bath.

5. The method according to claim 1 or 2, wherein the metal deposition is carried out by electrolysis in a microbath.

6. The method according to claim 1 or 2, wherein the metal deposition is carried out in at least two steps combining buffer electrolysis with electrolysis in a bath or microbath.

7. The method according to the preceding claim, applied to a blade (10) of a fan.

8. The method according to the preceding claim, wherein the electrolyte includes nickel sulfamate.

9. The method according to one of the preceding claims, wherein a metal layer between 10 µm and one nm is deposited.

10. A revolving blade of a turbine engine made of titanium or titanium alloy having a dovetail base and an axial bearing surface provided on said base, **characterised in that** said axial bearing surface is at least partly covered with a metal deposited, through electrolysis including nickel, cobalt or a combination of both.

11. Turbine engine including a blade according to claim 10.

## Patentansprüche

1. Reparaturverfahren durch Auffüllen eines Oberflächenabschnitts (14), der auf dem Fuß (13) einer beweglichen Turbotriebwerk-Schaufel (10) aus Titan oder Titanlegierung angeordnet ist, **dadurch gekennzeichnet, dass** auf dem Oberflächenabschnitt durch Elektrolyse Nickel, Kobalt oder eine Kombination der beiden Metalle abgeschieden wird.

2. Reparaturverfahren nach dem vorhergehenden Anspruch, wobei der Fuß (13) der Schaufel im Querschnitt schwalbenschwanzförmig ist und der Oberflächenabschnitt ein axialer abstützender Oberflächenabschnitt der Schaufel ist.

3. Verfahren nach einem der vorhergehenden Ansprüche, wobei die Metallabscheidung durch Pufferelektrolyse erfolgt.

4. Verfahren nach einem der Ansprüche 1 oder 2, wobei die Metallabscheidung durch Elektrolyse im galvanischen Bad erfolgt.

5. Verfahren nach einem der Ansprüche 1 oder 2, wobei die Metallabscheidung durch Elektrolyse im Mikrobad erfolgt.

6. Verfahren nach einem der Ansprüche 1 oder 2, wobei die Metallabscheidung in mindestens zwei Schritten erfolgt, welche die Pufferelektrolyse und die Elektrolysen im galvanischen oder im Mikrobad kombinieren.

7. Verfahren nach dem vorhergehenden Anspruch, angewendet auf eine Gebläseschaufel (10).

8. Verfahren nach dem vorhergehenden Anspruch, wobei der Elektrolyt Nickelsulfamat umfasst.

9. Verfahren nach einem der vorhergehenden Ansprüche, nach dem eine Metallschicht zwischen 10 µm und einem mm abgeschieden wird.

10. Bewegliche Turbotriebwerk-Schaufel aus Titan oder Titanlegierung, die einen schwalbenschwanzförmigen Fuß und eine auf dem Fuß angeordnete axiale Stützfläche aufweist, **dadurch gekennzeichnet, dass** die axiale Stützfläche mindestens teilweise elektrolytisch mit einer Metallabscheidung beschichtet wird, die Nickel, Kobalt oder eine Kombination von beiden umfasst.

11. Turbotriebwerk, umfassend eine Schaufel nach Anspruch 10.
